# EUROPEAN PATENT SPECIFICATION

(11) **EP 3 043 922 B1**
(45) Date of publication and mention of the grant of the patent: **19.07.2017**
(21) Application number: 14762017.3
(22) Date of filing: 11.09.2014
(51) Int. Cl.: B05B 7/04, B05B 15/02, B01J 2/04, A23P 10/40, B08B 17/06, A23L 33/00

(54) **INTERNAL MIX ATOMIZING SPRAY NOZZLE ASSEMBLY, PROCESS AND PRODUCT**
SPRÜHDÜSENANORDNUNG MIT INTERNER VERMISCHUNG, VERFAHREN UND PRODUKT
ENSEMBLE DE BUSE DE PULVÉRISATION PAR ATOMISATION À MÉLANGE INTERNE, PROCÉDÉ ET PRODUIT

(30) Priority: 13.09.2013 EP 13184448
(43) Date of publication of application: 20.07.2016
(73) Proprietor: N.V. Nutricia, 2712 HM Zoetermeer (NL)
(72) Inventor: VAN DIJKE, Koen Cornelis, 3584 CT Utrecht (NL); VAN DEN BRENK, Joep, 6883 EP Velp (NL)
(74) Representative: Clarenbach, Carl-Philipp
(86) International application number: PCT/EP2014/069455
(87) International publication number: WO 2015/036514

(56) References cited:
- EP-A1- 0 703 135
- EP-A2- 0 083 122
- JP-A- H01 317 562
- US-A- 3 905 554
- US-A- 4 241 656
- US-A- 4 347 984
- US-A- 5 271 562
- US-A1- 2011 147 491
- US-B1- 6 248 378

## Description

The present invention concerns an internal mix atomizing spray nozzle assembly according to the preamble of claim 1, in particular for preparing a spray-dried lipid and protein component containing composition, comprising a fluid nozzle with a liquid flow passage having a liquid discharge opening directed into a mixing chamber, a spray tip comprising the mixing chamber and having at least one discharge orifice at its free end, an air supply system comprising an annular air-flow passage arranged at least essentially coaxial to a liquid flow passage and having an annular air dis-charge opening directed into the mixing chamber.

The invention further pertains to a process for preparing a spay-dried lipid and protein component-containing composition which is a spray-dried infant or follow-on formula or growing-up milk and comprises lipid globules.

### Prior art

Spray nozzle assemblies as described above have been known in the art for some time, for example in patent application US 2006/0038041 A1. These air atomizing nozzles are used for generating and discharging a fine atomized and dried spray, in particular at high flow rates. A so-called 2-fluid nozzle atomizes a liquid with a pressurized gas as the liquid is ejected out of the nozzle. For this purpose, the nozzle assembly comprises a fluid nozzle with a liquid flow passage in which the liquid that is to be atomized and dried is conveyed. Through a liquid discharge opening, the liquid is discharged from the liquid flow passage into a mixing chamber into which high pressurized air is also directed, in order to spray-dry the liquid. The mixing chamber in the above named patent application is provided by a spray tip having at least one discharge orifice at its free end through which the atomized and spray-dried fluid is discharged. For obtaining good results, it is disclosed to arrange an annular air-flow passage through which the pressurized air is directed into the mixing chamber coaxially to the liquid flow passage, such that the liquid is impinged by the pressurized air in a consistent manner.

Publication US 4,109,090 A discloses a two-phase sprayer with a liquid supply tube surrounded by coaxial gas or gas mixtures supply tube, whereby the tubes merge into a mixing chamber.

Furthermore, it is known from US 4,241,656 A a spray nozzle assembly having a fluid nozzle with a liquid flow passage which is surrounded by an annular air-flow passage, both passages merging into a mixing chamber. A similar spray nozzle assembly is disclosed by US 2011/0147491 A1.

From DE 199 349 20 C1 an annular air-flow passage is known which is coaxial to a liquid flow passage of a spray nozzle, whereby discharge orifices are provided on an edge of a spray tip of said spray nozzle.

Document JP H01 317562 A discloses a nozzle assembly having a spray tip with a plurality of recesses on its outer surface, whereby the recesses provide a grip for the easier assembly of the nozzle.

With certain liquids to be atomized, fouling of spray nozzles is a common issue. If the fouling occurs at the exterior of the spray nozzle tip, the phenomenon is known as "bearding". This can cause problems if certain product lumps start to smoulder or cause quality problems. If the fouling occurs within the mixing chamber itself, it can disturb the spray formation as this fouling influences the mixing of the air and the liquid in the mixing chamber.

### Object of the invention

One object of the present invention is to provide an internal mix atomizing spray nozzle assembly which reduces the risk of fouling and which guarantees a stable spray formation and a high quality product.

A further object of the present invention is to provide a high quality process for preparing a spray-dried lipid and protein component containing composition.

### Summary of the invention

The inventive internal mix atomizing spray nozzle assembly with the features of claim 1 has the advantage that an internal fouling process is prohibited in an easy and cost-effective way. According to the invention, the annular air-flow passage which opens into the mixing chamber is designed cylindrical with a constant cross section. The sidewalls of the air flow passage are therefore designed such that neither the diameter of the innerside wall nor the diameter of the outer-side wall changes along the longitudinal extension of the air-flow passage. Due to this advantageous design, smooth and stable flow fields are ensured in the airflow passage and within the mixing chamber. Also, due to the constant cross section of the air-flow passage, areas in which turbulences could lead to sections where an airstream does not flow (dead zones), the possibility for internal fouling is minimized, as the whole air-flow passage is always impinged by the pressurized air at all times. With the inventive design of the nozzle assembly dead zones in the mixing chamber or in the air-flow passage are avoided.

According to a preferred embodiment of the present invention, the annular air-flow passage is formed between a cylindrical sidewall of the fluid nozzle and a cylindrical sidewall of the spray tip which at least partially receives the fluid nozzle. The air-flow passage is therefore provided by the interaction of the spray tip and the fluid nozzle. The spray tip is preferably designed cup-shaped, to fit over the fluid nozzle. By doing so the annular air-flow passage is easily provided, whereby the spray tip is preferably designed such that the spray tip together with the fluid nozzle compose the mixing chamber. According to this embodiment, the volume and the design of the mixing chamber is limited by the design of the spray tip and of the fluid nozzle. It is particularly preferred, if the fluid nozzle comprises an outer winding which engages an inner winding of the spray tip for an easy and reliable attachment of the spray tip.

According to a preferred embodiment of the present invention, the fluid nozzle comprises a flat end face, in which the liquid discharge opening is arranged. In this embodiment, the bottom of the cup-shaped fluid nozzle or spray tip constitutes the flat end face and is preferably arranged at least essentially perpendicular to the axial direction of the air-flow passage and/or the fluid-flow passage. The end face constitutes an impingement surface onto which the fluid is driven for further atomization.

According to the present invention, the spray tip comprises a cylindrical outer surface of the cylindrical sidewall, the sidewall having an edge at its free end where the at least one discharge orifice is arranged. The cup-shaped spray tip is therefore designed such that it comprises the cylindrical side-wall and the flat end face which merge at said edge where the at least one discharge orifice is arranged. Due to the arrangement of the discharge orifice on the edge, an advantageous discharged spray formation is formed due to which a large and steady spray radius is reached.

According to the present invention, the spray tip comprises at least one recess, in particular a plurality of recesses, in the outer surface of the cylindrical sidewall extending towards the edge of the spray tip. The one or the plurality of recesses in the outer surface constitute air guidance means. During the spray-dry process, the discharged spray induces an air-flow into the air surrounding the spray tip. The one or the plurality of recesses guides the surrounding air-flow into a certain direction, in particular towards the edge of the spray tip, such that the induced air-flow passes the spray tip close to the edge before it meets the discharged spray. Due to this special design, outer fouling is prohibited, since parts of the composition which could have remained on said end of the spray tip due to turbulences are now immediately transported away from the edge by the air-flow directed by the recess/recesses.

According to the present invention the at least one recess, particularly all recesses are designed open toward the edge of the spray tip. This means that the depth and cross section of the one or the plurality of recesses is maintained up to the edge, such that in a top view the spray tip comprises one or a plurality of recesses on the edge providing the spray tip with a polygonal outer contour. Due to this design, the induced air-flow in the surrounding air is led in the closest possible manner along the edge of the spray tip, thereby prohibiting bearding or outer fouling.

The at least one recess is arranged next to the at least one discharge orifice at the edge of the spray tip. Due to a close arrangement of a recess to a neighbouring orifice, the air-flow of the surrounding air is induced particularly efficient.

According to a particular preferred embodiment of the invention, the plurality of said recesses are distributed on the circumference of the spray tip. Preferably, the number of recesses equals to the number of discharge orifices of the spray tip, to guarantee an optimal result.

It is particularly preferred, if said plurality of recesses is distributed evenly around the circumference of the spray tip to obtain an evenly induced air-flow on the outside of the spray tip. Herewith, it is also guaranteed that the induced air-flow mixes evenly with the spray discharged from the spray discharge orifices at the spray tip, leading to a symmetrical spray formation.

According to a preferred embodiment of the present invention, a plurality of discharge orifices is arranged at the edge of the spray tip and between every two adjacent recesses one of the discharge orifices is arranged. Due to this embodiment, the possibility for an outer fouling process is minimized and a symmetrical induced air-flow as well as a symmetrical spray formation are guaranteed. Due to the arrangement of the recesses between the discharge orifices, the recesses and the discharge orifices are preferably on the same diameter of the spray tip such that air conveyed through the recesses is also led radially inward to the center-axis of the spray tip without intersecting the discharge spray such that the induced air stream frees the bottom of the spray tip from particles, thereby prohibiting outer fouling at the bottom.

Preferably, each of the recesses extends axially as a notch towards the edge. A notch is typically characterized by a certain length-to-width-ratio, wherein a notch is obviously longer than wide or deep. Depending on the size of the spray tip, the size of the discharge orifice of the spray tip and the discharge force and speed of the atomized spray, an optimal length and width of the one or the plurality of notches or recesses can be provided.

Preferably, each of the recesses or notches comprises a curved, in particular semi-circular cross section. The curved cross-section guarantees a smooth and stable air-flow along the outside of the spray tip with little or none turbulences which could lead to fouling possibilities.

According to a further preferred embodiment of the present invention, the spray tip comprises an impingement surface in the mixing chamber opposing the liquid discharge opening. As described above, the impingement surface can be constituted by the bottom or the flat end face of the spray tip itself. However, it is also possible to provide the impingement surface as separate impingement element arranged in the mixing chamber. Preferably the impingement surface, whether it is provided by the flat end face or a separate impingement element, is provided with a central protrusion, in particular in the form of a central and symmetrical impingement protrusion with a cone shape. Preferably, the impingement protrusion is designed such that its impingement sidewall extends parallel to the direction of the dis-charge orifices in the edge of the spray tip. It is particularly preferable, if the impingement element is designed such that it leads the atomized spray towards the edge or the discharge orifices for an advantageous and symmetrical spray process.

According to an also disclosed embodiment the spray tip comprises or is provided with at least one bypass flow passage leading from the annular air flow passage to the bottom of the spray tip to provide an anti-fouling air stream in particular outside of the spray tip. The bypass flow passage leads air conveyed into the annular air flow passage partially away from the annular air flow passage directly to the bottom of the spray tip, thereby bypassing the mixing chamber. At the bottom of the spray tip the bypassed air is discharged to provide the anti-fouling air stream. The anti-fouling air stream prohibits particles from resting on the outside of the spray tip, such that outer fouling cannot occur. The air stream is preferably directed such that it carries particles away from the surface of the spray tip, in particular from the bottom of the spray tip. The bypass flow passage preferably originates close to air guide channels through which the pressurized air is guided into the annular air flow passage. By taking air from the annular air flow passage it is guaranteed that the anti-fouling air stream does not comprise any particles itself.

It is also disclosed that the bypass flow passage is designed as one or a plurality of integral channels leading through the circumferential side wall of the spray tip. According to a further disclosed embodiment the channels are designed as bore-holes.

According to another disclosed embodiment a sleeve is preferably arranged on the spray tip, whereby at least a section of the bypass flow passage is formed radially between the sleeve and the spray tip. According to this embodiment the bypass flow passage is therefore constituted by the inner sidewall of the sleeve and the outer sidewall of the spray tip. According to another disclosed embodiment the bypass flow passage or at least the section thereof is designed as annular bypass flow passage constituted by the sleeve having an inner diameter greater than the outer diameter of the spray tip. This section of the bypass flow passage is preferably connected to the annular air flow passage by one or preferably a plurality of openings extending at least essentially radial through the spray tip.

Preferably, the spray tip comprises at least one opening leading from the section of the bypass flow passage between the sleeve and the spray tip through the bottom of the spray tip such that air led through the bypass flow passage is discharged radially inward. The flow paths of the bypass flow passage and of the atomized spray therefore preferably cross at the bottom of the spray tip, in particular within said edge. It is preferably provided that between each discharge orifice one opening leading from the section of the bypass flow passage is arranged such that the different flow paths do not intersect. At the bottom the spray tip is preferably provided with a cavity into which the one or the plurality of openings coming from the section of the bypass flow passage lead. The cavity is preferably covered by a plate or disc having a plurality of small discharge openings therein through which the bypassed air is discharged. The plurality of small dis-charge openings is arranged in the plate of the bottom of the spray tip such that the anti-fouling air stream is discharged radially between the discharge orifices such that the anti-fouling air stream constitutes an anti-fouling curtain which keeps the outer nozzle surface clean and free of particles which could lead to fouling.

The inventive process for preparing a spray-dried lipid and protein component-containing composition with the features of claim 9 is characterized in that a lipid and protein component-containing composition comprising lipid globules is spray-dried employing the inventive spray nozzle assembly. Infant or follow-on formula are used successfully in feeding infants in cases where breast-feeding is impossible or less desirable. Still, the composition of such formulations should resemble breast milk as closely as possible, which is the preferred method of feeding infants to accommodate the special nutritional requirements of the fast-growing and developing infant. In known processes for preparing infant or follow-on formula the fat or lipid phase comprising lipids and lipid-soluble vitamins is mixed vigorously with the aqueous phase comprising proteins and carbohydrates and the mixture is homogenized under high pressure by a conventional high pressure homogenizer alone or in combination with a high pressure pump. Also, during spray-drying high pressures are used to obtain a powdered form of the emulsion. Since the structure of lipid globules in unprocessed or raw milk, such as human milk, in which the lipid globules are larger and covered with a milk globule membrane comprising polar lipids in higher quantities than in known machine-processed IMF (infant milk formula), the preparation of larger lipid globules is desirable in order to prepare infant or follow-on formula which closely resembles human milk. Preferably, the process is carried out by having a liquid flow through the nozzle of 450 kg/h and with an air pressure of 5 bar (g) to receive an infant formula concentrate at 58% TS (total solid). With the advantageous design of the spray nozzle assembly a fouling effect was reduced drastically compared to known spray nozzle assemblies. A run of at least 6 hours could be performed without affecting the spray performance due to fouling. With a spray nozzle assembly of the prior art a maximum of 3.5 hours of operation was reached when fouling in particular in the mixing chamber and on the outside was found and decreased the spray performance detected by increased fouling in the dryer.

During the spray-drying process, with a 2-fluid nozzle the pressure for spray-drying is preferably as low as possible without fouling the spray dryer which would lead to the disadvantages explained before. By using a 2-fluid nozzle, which preferably excerpts low sheer forces onto the lipid and protein component-containing composition to be spray-dried, higher smoulding temperatures, that means a temperature at which the risk of self-ignition of the spray-dried power exists, is higher than in known processes. By employing the inventive spray nozzle assembly, the pressure of the spray-drying process can be optimized, since the fouling risk is reduced by the inventive design of the spray nozzle assembly as described above. In particular, if the inner fouling is reduced by the special design of the air-flow passage, and the outer fouling is reduced by providing the one or more recesses in the outer sidewall of the spray tip, the fouling risk is reduced to a minimum, thereby a high quality spray-dried lipid and protein component-containing composition is guaranteed and the time in which the process has to be stopped for cleaning purposes is reduced to a minimum.

Furthermore a product can be obtained by the inventive process employing the inventive spray nozzle assembly. The product is characterized by a large lipid globule size and a high quality with regard to fouling matters. Further preferred embodiments of the present invention are subject of the subclaims.

The invention is further described by way of the following example and the accompanying figures. The figures show:
- Figure 1: a internal mix atomizing spray nozzle assembly according to the invention in a cross-sectional representation,
- Figure 2: the spray nozzle assembly in a perspective representation,
- Figure 3: a cross sectional representation of another embodiment of the spray tip not according to the invention and
- Figure 4: a perspective representation of the spray tip according to the other embodiment.

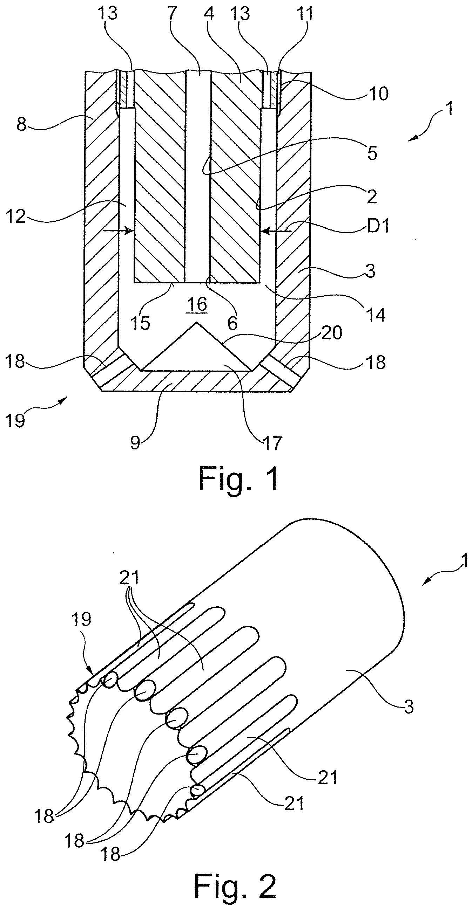

Figure 1 shows in a cross-sectional view an internal mix atomizing spray nozzle assembly 1 according to the present invention which comprises a fluid nozzle 2 and a spray tip 3.

The fluid nozzle 2 is designed as cylindrical protrusion of a nozzle body 4. While according to the illustrated example of Figure 1, the fluid nozzle 2 and the nozzle body 4 are designed in one piece, it is also possible, to provide a 2-part solution. The fluid nozzle 2 further comprises a liquid flow-passage 5 which extends axially through the center of the fluid nozzle 2 and which comprises a liquid discharge opening 6 at the free end of the fluid nozzle 2. The fluid flow-passage 5 is connected to a fluid channel 7 of the nozzle body 4 through which a fluid is or can be conveyed to the fluid flow-passage 5. The other end of the fluid channel 7 may be connected to a fluid source providing the fluid with a certain pressure or mass flow rate.

Due to its cylindrical shape, the fluid nozzle 2 is provided with a constant outer diameter D1.

The longitudinal section of the spray tip 3 is essentially cup-shaped, having a cylindrical sidewall 8 and a bottom 9. The inner diameter D2 of the inside surface of the cylindrical sidewall 8 of the spray tip 3 is larger than the diameter D1 of the fluid nozzle 2, such that the fluid nozzle 2 can be inserted into the spray tip 3 as shown in figure 1.

At its opened end, the spray tip 3 is provided with an inner winding 10 which engages an outer winding 11 of the nozzle body 4. The spray tip 3 is therefore easily connected to the nozzle body 4 by means of a screwed joint.

The inner diameter D2 is furthermore designed such that the cylindrical sidewall 8 extends radially spaced apart from the fluid nozzle 2 constituting an annular air-flow passage 12 of an air supply system with a constant cross section. Since the spray tip 3 and the fluid nozzle 2 are designed cylindrical, also the air-flow passage 12 is cylindrical in shape.

The nozzle body 4 comprises a plurality of air guide channels 13 of the air supply system through which pressurized air can be guided into the annular air-flow passage 12. Preferably the air guide channels 13 are arranged in a slanted manner, such that the air flowing into the annular air-flow passage 12 will circulate around the fluid nozzle 2. The air guide channels are connected/connectable to an air pressure source which delivers the pressurized air to be guided into the annular air-flow passage.

The air-flow passage 12 ends in an annular discharge opening 14, the air discharge opening 14 being defined by the end of the fluid nozzle 2.

The length of the spray tip 3 is such that between the bottom 9 and the end face 15 of the fluid nozzle 2, which preferably is designed flat and arranged perpendicular to the axial direction of the fluid flow-passage 5, are arranged spaced apart from another, thereby constituting a mixing chamber 16. The fluid discharge opening 6 and the air discharge opening 14 are both directed into the mixing chamber 16.

Within the mixing chamber 16 an impingement element 17 is provided. The impingement element 17 is arranged on the bottom 9 and features a cone shape. The impingement element 17 is arranged such that a center axis of the impingement element is aligned with the center axis of the fluid nozzle 2 and in particular of the fluid flow channel 5.

The spray tip 3 further comprises a plurality of discharge orifices 18 which are arranged in an annular edge 19 where the cylindrical sidewall 8 and the bottom 9 are merged. At the edge 19 the spray tip 8 comprises a section which is arranged transverse with respect to the bottom and the cylindrical sidewall 8. The discharge orifices 18 are arranged in said section or at the edge 19 of the spray tip 3 and aligned such that they point outwards from the center axis of the spray tip 3, preferably essentially parallel to the impingement surface 20 of the cone-shaped impingement element 17.

The function of the two-fluid nozzle assembly 1 which comprises the internal mixing chamber 16 is as follows:
Through the fluid flow passage 5 a liquid, in particular a lipid and protein component-containing composition comprising lipid globules, is conveyed into the mixing chamber 16. At the same time pressurized air is directed by the air guide channels 13 into the annular air-flow passage 12, such that it circulates around the fluid nozzle 2 and into the mixing chamber 16.

In the mixing chamber 16 the liquid is impinged by the pressurized air as well as by the impingement surface 20 of the impingement element 17. Thereby, the liquid becomes atomized. Through the discharge orifices 18 the atomized lipid and protein component-containing composition is discharged.

Due to the proposed design of the nozzle assembly 1 fouling is prohibited within the spray tip 3. Since the annular air-flow passage 12 is designed cylindrical with a constant diameter, the outer sidewall of the fluid nozzle 2 is evenly impinged by the pressurized air such that liquid or composition particles are safely removed from the outside of the fluid nozzle 2 at all times.

While the inside design described above pertains to the so-called inner-fouling of spray nozzles, the outside design disclosed in figure 2 refers to the problem of external fouling.

Figure 2 shows the spray nozzle assembly 1 of figure 1 in a perspective top view. To minimize or prohibit external fouling, the cylindrical sidewall 8 of the spray tip 3 comprises a plurality of evenly distributed recesses 21 in its outer surface. The recesses 21 are designed as notches which extend axially approximately from the middle of the spray tip 3 towards the edge 19, whereby each recess 21 is designed open toward the edge 19 of the spray tip 3. The recesses 21 are arranged such that between each discharge orifice 18, one of the recesses 21 ends in the edge 19. The recesses 21 are designed as notches having a curved cross section. At their ends opposing the edge 19, the recesses 21 comprise a smooth transition to the out-side wall of the spray tip 3.

During use of the nozzle assembly 1, the recesses 21 guide surrounding air into which an air-flow is induced by the discharged spray axially along the spray tip 3 towards the edge 19. Since the recesses 21 are designed open toward the edge 19, the recesses 21 end directly next to the dis-charge orifices 18. The air stream induced by the discharge spray is thereby led along the outer sidewall of the spray tip 3 towards the edge 19, such that prevention of external fouling is guaranteed. Parts of the spray or the liquid cannot remain on the outside of the spray tip 3 due to the air stream induced by the spray itself.

The described internal mix atomizing spray nozzle assembly 1 shown in figures 1 and 2 is preferably used/employed in a process for preparing a spray-dried lipid and protein component-containing composition, which is a spray-dried infant or follow-on formula or growing-up milk and comprises lipid globules, wherein a lipid and protein component-containing composition comprising lipid globules is spray-dried, employing the spray nozzle assembly 1 as described above. By using the spray nozzle assembly 1 internal and external fouling is reduced to a minimum or prohibited completely and a comparably large size of the globules can be reached.

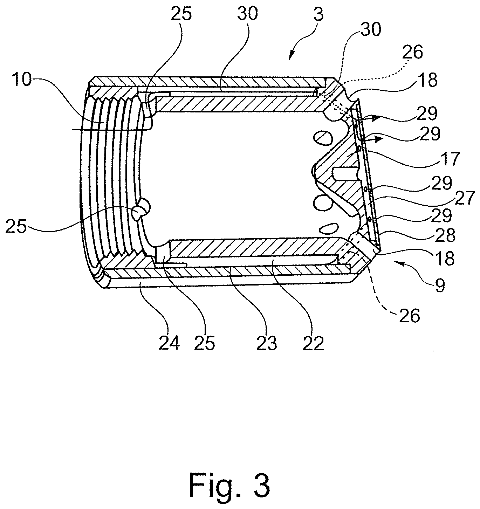

Figure 3 discloses another embodiment of the internal mix atomizing spray nozzle assembly 1, not according to the present invention, whereby a cross sectional view of the spray tip 3 only is shown. The spray tip 3 according to this embodiment differs from the forgoing example in the design to minimize or prohibit external/outer fouling. In contrast to the forgoing design the present spray tip 3 does not comprise the recesses 21 on its outer surface. Instead, one recess 22 is provided which is designed as annular recess extending over the whole circumference of the outer surface of the spray tip 3. Onto the spray tip 3 a cylindrical sleeve 24 is slid which covers the recess 22 completely such that the inner sidewall of the sleeve 24 and the outer sidewall of the spray tip 3 in the region of the recess 22 define an annular flow passage 23.

Close to the inner winding 10 of the spray tip 3 a plurality of openings 25 is provided which extend from the annular air flow passage 12 to the flow passage 23 between the sleeve 24 and the spray tip 3.

A plurality of openings 26 is also provided at the bottom 9 of the spray tip. The openings 26 lead from the flow passage 23 to a cavity 27 in the end face of the bottom 9. One opening 26 is arranged between each two neighbouring discharge orifices 18 and therefore only drawn as dotted lines in Figure 3.

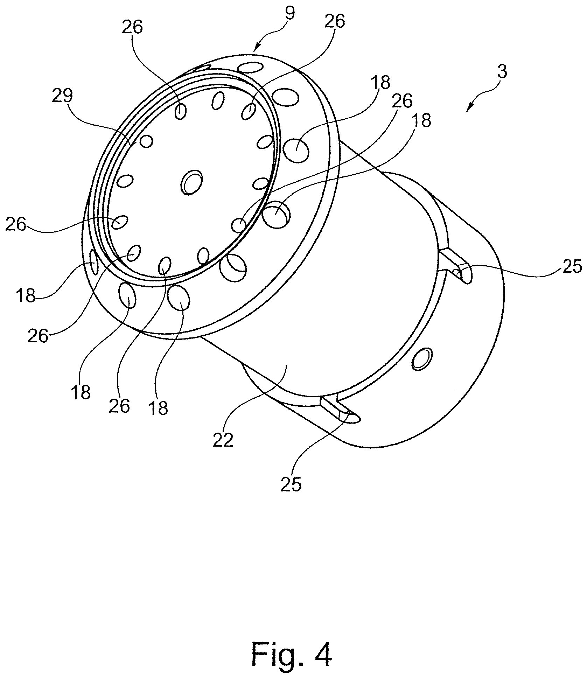

Figure 4 shows a perspective representation of the spray tip 3 according to the embodiment of Figure 3 but without the sleeve 24 and the plate 28. It can be seen, that the openings 26 are equally spaced apart from another across the circumference of the cavity 23. Furthermore, the openings 26 are all directed to the center or the axis of the spray tip 3 such that the air led through the openings 26 is guided towards the center of the cavity 27.

The cavity 27 is covered by a plate 28 in the form of a disc which comprises a plurality of small discharge openings 29 which are arranged in two coaxial circles across the plate 28. The plate 28 is fixed on the bottom 9 of the spray tip axially spaced apart from the bottom of the cavity 27.

The openings 25, the flow path 23, the openings 26, the cavity 27 and the small discharge openings 29 in the plate 28 constitute a bypass flow passage 30, indicated by an arrow in figure 3, through which a small part of the air introduced into the annular flow passage 12 is led such that it is discharged from the openings 25 as a anti-fouling air stream or air curtain which prevents particles discharged from the discharge orifices 18 from remaining on the bottom 9 of the spray tip 3. Herewith an active removal of particles from the spray tip 3 is realized which prohibits outer fouling of the spray nozzle assembly 1 in a very effective way.

## Claims

1. Internal mix atomizing spray two-fluid nozzle assembly (1), in particular for preparing a spray-dried lipid and protein component-containing composition, comprising a fluid nozzle (2) with a liquid flow passage (5) having a liquid discharge opening (6) directed into an internal mixing chamber (16), a spray tip (3) comprising the mixing chamber (16) and having at least one discharge orifice (18) at its free end, an air supply system comprising an annular air flow passage (12) arranged at least essentially coaxial to the liquid flow passage (5) and having an annular air discharge opening (14) directed into the mixing chamber (16), whereby the annular air flow passage (12) is designed cylindrical with a constant cross section, **characterized in that** the spray tip (3) comprises an at least essentially cylindrical outer surface of an cylindrical side wall (8) of the spray tip (3) having an edge (19) at the free end where the at least one discharge orifice (18) is arranged, and **in that** the spray tip (3) comprises at least one recess (21), in particular a plurality of recesses (21), in the outer surface of the side wall (8), the recess extending towards the edge (19) of the spray tip (3) and being designed open toward the edge (19) of the spray tip (3), whereby the at least one recess (21) ends next to the at least one discharge orifice (18) arranged at the edge (19) of the spray tip (3).

2. Spray nozzle assembly according to claim 1, **characterized in that** the annular air flow passage (5) is formed between a cylindrical side wall of the fluid nozzle (2) and the cylindrical side wall (8) of the spray tip (3) which at least partially receives the fluid nozzle (2).

3. Spray nozzle assembly according to one of the preceding claims, **characterized in that** the fluid nozzle (2) comprises a flat end face (15) in which the liquid discharge opening (6) is arranged, the end face (15) being preferably arranged perpendicular to the annular air flow passage (12) and the fluid flow passage (5).

4. Spray nozzle assembly according to one of the preceding claims, **characterized in that** a plurality of said recesses (21) are distributed on the circumference of the spray tip (3).

5. Spray nozzle assembly according to claim 4, **characterized in that** said plurality of recesses (21) is distributed evenly around the circumference of the spray tip (3).

6. Spray nozzle assembly according to one of claims 4 and 5, **characterized in that** a plurality of discharge orifices (18) is arranged at the edge (19) of the spray tip and that between every two adjacent recesses (21) one of the discharge orifices (18) is arranged.

7. Spray nozzle assembly according to one of the preceding claims, **characterized in that** each of the recesses (21) extends axially as a notch towards the edge (19).

8. Spray nozzle assembly according to one of the preceding claims, **characterized in that** each of the recesses (21) comprises a curved, in particular semi-circular cross section.

9. A process for preparing a spray-dried lipid and protein component-containing composition, which is a spray-dried infant or follow-on formula or growing up milk and comprises lipid globules, wherein a lipid and protein component containing composition comprising lipid globules is spray-dried employing the spray nozzle assembly (1) of one of claims 1 to 8.

## Patentansprüche

1. Zerstäubende Zwei-Flüssigkeits-Sprühdüsen-Anordnung mit interner Vermischung (1), insbesondere zur Herstellung einer sprühgetrockneten, Lipid- und Proteinkomponenten enthaltenden Zusammensetzung, umfassend eine Flüssigkeitsdüse (2) mit einem Flüssigkeitsstrom-Durchlass (5) mit einer Flüssigkeitsablauföffnung (6), die in eine innere Mischkammer (16) gerichtet ist, einer Sprühspitze (3) umfassend die Mischkammer (16) und mit mindestens einer Ablauföffnung (18) an ihrem freien Ende, einem Luftzufuhrsystem umfassend einen ringförmigen Luftstromdurchlass (12), der zumindest im Wesentlichen koaxial zu dem Flüssigkeitsstrom-Durchlass (5) angeordnet ist, und mit einer ringförmigen Luftablauföffnung (14), die in die Mischkammer (16) gerichtet ist, wobei der ringförmige Luftstromdurchlass (12) zylindrisch mit einem konstanten Querschnitt ausgebildet ist, **dadurch gekennzeichnet, dass** die Sprühspitze (3) eine zumindest im Wesentlichen zylindrische Außenfläche einer zylindrischen Seitenwand (8) der Sprühspitze (3) mit einer Kante (19) an dem freien Ende, an dem die mindestens eine Ablauföffnung (18) angeordnet ist, umfasst und dass die Sprühspitze (3) mindestens eine Ausnehmung (21), insbesondere eine Vielzahl von Ausnehmungen (21), in der Außenfläche der Seitenwand (8) umfasst, wobei die Ausnehmung in Richtung der Kante (19) der Sprühspitze (3) verläuft und so ausgebildet ist, dass sie offen in Richtung zu der Kante (19) der Sprühspitze (3) ist, wobei die mindestens eine Ausnehmung (21) neben der mindestens einen Ablauföffnung (18), die an der Kante (19) der Sprühspitze (3) angeordnet ist, endet.

2. Sprühdüsen-Anordnung nach Anspruch 1, **dadurch gekennzeichnet, dass** der ringförmige Luftstromdurchlass (5) zwischen einer zylindrischen Seitenwand der Flüssigkeitsdüse (2) und der zylindrischen Seitenwand (8) der Sprühspitze (3), die die Flüssigkeitsdüse (2) zumindest teilweise aufnimmt, gebildet ist.

3. Sprühdüsen-Anordnung nach einem der vorhergehenden Ansprüche, **dadurch gekennzeichnet, dass** die Flüssigkeitsdüse (2) eine flache Stirnseite (15) umfasst, in der die Flüssigkeitsablauföffnung (6) angeordnet ist, wobei die Stirnseite (15) vorzugsweise senkrecht zu dem ringförmigen Luftstromdurchlass (12) und dem Flüssigkeitsstromdurchlass (5) angeordnet ist.

4. Sprühdüsen-Anordnung nach einem der vorhergehenden Ansprüche, **dadurch gekennzeichnet, dass** eine Vielzahl von Ausnehmungen (21) über den Umfang der Sprühspitze (3) verteilt sind.

5. Sprühdüsen-Anordnung nach Anspruch 4, **dadurch gekennzeichnet, dass** die Vielzahl von Ausnehmungen (21) gleichmäßig über den Umfang der Sprühspitze (3) verteilt sind.

6. Sprühdüsen-Anordnung nach einem der Ansprüche 4 und 5, **dadurch gekennzeichnet, dass** eine Vielzahl von Ablauföffnungen (18) an der Kante (19) der Sprühspitze angeordnet sind, und dass zwischen jeweils zwei benachbarten Ausnehmungen (21) eine der Ablauföffnungen (18) angeordnet ist.

7. Sprühdüsen-Anordnung nach einem der vorhergehenden Ansprüche, **dadurch gekennzeichnet, dass** jede der Ausnehmungen (21) axial als eine Kerbe in Richtung der Kante (19) verläuft.

8. Sprühdüsen-Anordnung nach einem der vorhergehenden Ansprüche, **dadurch gekennzeichnet, dass** jede der Ausnehmungen (21) einen gekrümmten, insbesondere halbkreisförmigen, Querschnitt umfasst.

9. Verfahren zur Herstellung einer sprühgetrockneten, Lipid- und Proteinkomponenten enthaltenden Zusammensetzung, bei der es sich um eine sprühgetrocknete Säuglingsanfangsnahrung oder Folgenahrung oder eine Milch für Heranwachsende handelt und die Lipidkügelchen umfasst, wobei eine Lipid- und Proteinkomponenten enthaltende Zusammensetzung, die Lipidkügelchen umfasst, mit Hilfe der Sprühdüsen-Anordnung (1) nach einem der Ansprüche 1 bis 8 sprühgetrocknet wird.

## Revendications

1. Ensemble de buse à deux fluides de pulvérisation d'atomisation de mélange interne (1), notamment pour préparer une composition contenant des composants lipidiques et protéiques séchée par atomisation, comprenant une buse à fluide (2) avec un passage d'écoulement de liquide (5) ayant une ouverture d'évacuation de liquide (6) dirigée dans une chambre de mélange interne (16), une pointe de pulvérisation (3) comprenant la chambre de mélange (16) et ayant au moins un orifice d'évacuation (18) à son extrémité libre, un système de fourniture d'air comprenant un passage d'écoulement d'air annulaire (12) agencé au moins essentiellement de manière coaxiale au passage d'écoulement de liquide (5) et ayant une ouverture d'évacuation d'air annulaire (14) dirigée dans la chambre de mélange (16), moyennant quoi le passage d'écoulement d'air annulaire (12) est conçu de manière cylindrique avec une section transversale constante, **caractérisé en ce que** la pointe de pulvérisation (3) comprend une surface externe au moins essentiellement cylindrique d'une paroi latérale cylindrique (8) de la pointe de pulvérisation (3) ayant un bord (19) à son extrémité libre où l'au moins un orifice d'évacuation (18) est agencé, et **en ce que** la pointe de pulvérisation (3) comprend au moins un retrait (21), notamment une pluralité de retraits (21), dans la surface externe de la paroi latérale (8), le retrait s'étendant vers le bord (19) de la pointe de pulvérisation (3) et étant conçu de manière ouverte vers le bord (19) de la pointe de pulvérisation (3), moyennant quoi l'au moins un retrait (21) se termine à côté de l'au moins un orifice d'évacuation (18) agencé au niveau du bord (19) de la pointe de pulvérisation (3).

2. Ensemble de buse de pulvérisation selon la revendication 1, **caractérisé en ce que** le passage d'écoulement d'air annulaire (5) est formé entre une paroi latérale cylindrique de la buse à fluide (2) et la paroi latérale cylindrique (8) de la pointe de pulvérisation (3) qui reçoit au moins partiellement la buse à fluide (2).

3. Ensemble de buse de pulvérisation selon une des revendications précédentes, **caractérisé en ce que** la buse à fluide (2) comprend une face d'extrémité plate (15) dans laquelle l'ouverture d'évacuation de liquide (6) est agencée, la face d'extrémité (15) étant de préférence agencée perpendiculairement au passage d'écoulement d'air annulaire (12) et au passage d'écoulement de fluide (5).

4. Ensemble de buse de pulvérisation selon une des revendications précédentes, **caractérisé en ce qu'**une pluralité desdits retraits (21) est distribuée sur la circonférence de la pointe de pulvérisation (3).

5. Ensemble de buse de pulvérisation selon la revendication 4, **caractérisé en ce que** ladite pluralité de retraits (21) est distribuée uniformément autour de la circonférence de la pointe de pulvérisation (3).

6. Ensemble de buse de pulvérisation selon une des revendications 4 et 5, **caractérisé en ce qu'**une pluralité d'orifices d'évacuation (18) est agencée au niveau du bord (19) de la pointe de pulvérisation et qu'un des orifices d'évacuation (18) est agencé entre chaque paire de retraits adjacents (21).

7. Ensemble de buse de pulvérisation selon une des revendications précédentes, **caractérisé en ce que** chacun des retraits (21) s'étend axialement comme une encoche vers le bord (19).

8. Ensemble de buse de pulvérisation selon une des revendications précédentes, **caractérisé en ce que** chacun des retraits (21) comprend une section transversale courbée, notamment semi-circulaire.

9. Procédé de préparation d'une composition contenant des composants lipidiques et protéiques séchée par atomisation, qui est un lait infantile ou 2^{ème} âge ou de suite séché par atomisation et comprend des globules lipidiques, dans lequel une composition contenant des composants lipidiques et protéiques comprenant des globules lipidiques est séchée par atomisation en employant l'ensemble de buse de pulvérisation (1) selon une des revendications 1 à 8.
